# EUROPEAN PATENT APPLICATION

(11) **EP 1 584 369 A1**
(43) Date of publication of application: **12.10.2005**
(21) Application number: 04425251.8
(22) Date of filing: 05.04.2004
(51) Int. Cl.: B01D 53/94

(54) **Device for reducing polluting substances present in exhaust gases of an internal-combustion engine**

(71) Applicant: Pellegrino, Luigi, 10090 Rivalba (IT)
(72) Inventor: Pellegrino, Luigi, 10090 Rivalba (Torino) (IT); Tenci, Pier Luigi, 10099 San Mauro Torinese (Torino) (IT)
(74) Representative: Freyria Fava, Cristina

(57) **Abstract**

The present invention relates to a device (1) for reducing polluting substances present in exhaust gases of an internal-combustion engine. The device (1) comprises a cylindrical case (2) provided with an inlet (3) and with an outlet (4) for the exhaust gases, and catalyst means (5; 7) housed in said case (2), between said inlet (3) and said outlet (4), and traversed, in use, by the exhaust gases. The catalyst means (5) comprise, with reference to the direction of flow of the exhaust gases through the cartridge (5a), an oxidiser (5b; 7) catalysed with palladium able substantially to reduce unburnt hydrocarbons, and a cartridge (5a) made of silica fibre with purity of at least 99%, catalysed preferably with platinum.

## Description

The present invention relates to a device for reducing polluting substances present in the exhaust gases of an internal combustion engine, be it Diesel cycle or Otto cycle, installed on motor vehicles, such as motor cars, lorries, buses, earth moving machines, forklift trucks, or in fixed installations, such as electrical generator sets and co-generation plants.

It is well known that the exhaust gases produced by internal combustion engine contain numerous harmful substances, such as unburnt hydrocarbons, carbon particulate, nitrogen and carbon oxides, alkaline-earth metals - such as calcium, potassium, magnesium contained in the engine lubrication oil - and sulphur - which may be contained in fuel oil.

In particular, for diesel engines the high oxygen content in exhaust gases favours the undesired oxidation of the ashes contained in lubricating oil. Numerous systems and devices have been designed to reduce the content of polluting emissions, such as carbon and unburnt hydrocarbons. Said devices generally have silica fibre catalysed with platinum.

In this regard, platinum is known to have an oxidising effect on nitrogen oxides, which are converted into nitrogen dioxide and subsequently used in the combustion of the carbon particulate. Platinum is also known to cause the undesired oxidation of molecules containing alkaline earth metals. The final product resulting from this oxidation is constituted by an impalpable whitish powder which is difficult to remove from the surfaces whereon it is deposited because of its sub-micron dimension.

Technical solutions to overcome said drawbacks are known; for example, one could mention the device described in the European patent EP-B1-0 340 078. Said device comprises a cylindrical case having an inlet and an outlet for the exhaust gases, and a cylindrical tubular cartridge housed inside the case, between the inlet and the outlet. The cartridge comprises a basket formed by two coaxial cylindrical tubular bodies of rigid mesh, respectively internal and external, between which is interposed a tubular mat containing catalysed mineral fibres.

The exhaust gases produced by the internal combustion engine are injected into the cartridge, which is radially traversed by expansion, and are thus purified by the mineral fibres and subsequently conveyed towards the outlet of the device.

Although the device described in the aforementioned patent has allowed to obtain good results and produces no oxides of alkaline-earth metals, it has been observed that said device does not allow to obtain an equally effective abatement of the carbon particulate, for an economically advantageous time under operating conditions where, due to the low temperature of the exhaust gases, or due to excess emissions of unburnt hydrocarbons, the catalysed fibre is made inactive by the deposit of unburnt hydrocarbons thereon.

The dual object of the present invention therefore is to provide, on one hand, a solution that enables catalysis at relatively low engine operating temperatures (in the order of 200°C) and, on the other side, the ability to convert the carbon particular, and in particular the unburnt hydrocarbons, contained in the engine lubricating oil.

According to the present invention, said object is achieved by a device having the characteristics specifically set out in the appended claims.

More specifically, the device of the present invention is constituted by a case provided with an inlet and an outlet for the exhaust gases, and catalyst means housed inside the case. The catalyst means comprise, with reference to the direction of flow of the exhaust gases through the cartridge, an oxidiser catalysed with palladium able to oxidise unburnt hydrocarbons without causing the undesired oxidation of the compounds of alkaline-earth metals and a catalyst cartridge made of silica fibre with purity of at least 99%, catalysed with platinum. In particular, the oxidiser can be constituted by: a layer made of 99% pure, and preferably 99.99% pure silica fibre, catalysed with palladium, a metal wire mesh coated with ceramic and treated with palladium, or an oxidiser having a honeycomb structure catalysed with palladium.

In an example of embodiment of the present invention, the device contains a layer made of silica fibre catalysed with palladium, or a metal wire mesh catalysed with palladium, in combination with an oxidiser having honeycomb structure, also catalysed with palladium positioned upstream of the catalyst cartridge made up by silica fibre catalysed with platinum.

An important advantage of the device of the present invention is that the palladium present in the silica fibre layer or in the ceramic-coated wire mesh or in the oxidiser with honeycomb structure does not oxidise, as does platinum, the molecules containing alkaline-earth metals, which are left free to flow out without polluting the catalyst cartridge containing platinum, thereby preventing phenomena of platinum poisoning and devitrification and/or crystallisation of the fibre itself. The considerable chemical-physical advantage deriving from the absence of the oxides of alkaline-earth metals consists of the greater efficiency of elimination of unburnt hydrocarbons and of carbon, both in terms of quantity and in terms of duration of the device itself over time.

An additional advantage deriving from the use of palladium in the oxidiser upstream of the catalyst cartridge is given by its ability substantially to reduce unburnt hydrocarbons leaving the catalyst cartridge, catalysed with platinum, with the task of self-producing the nitrogen dioxide required for the subsequent combustion of the carbon particulate. In particular, palladium allows to lower unburnt hydrocarbons to a highly efficient extent, transforming them into carbon dioxide and water.

A further important advantage of the present invention is that it allows to convert polluting emissions to back-pressure values that are generally lower than 150 mBar. The low back-pressure is favoured by the absence of unburnt hydrocarbons and of the ashes of the oxides of alkaline-earth metals which, if present, would tend to deactivate the catalyst cartridge catalysed with platinum during the catalysis process.

The configuration of the device allows an economically advantageous installation even on motor vehicles that have reduced spaces, being able to replace the normally installed muffler.

For a better understanding of the present invention, a preferred embodiment shall now be described, purely by way of non limiting example and with reference to the accompanying drawings, in which:
- Figure 1 is a longitudinal section of a device for reducing polluting substances according to the present invention;
- Figure 2 is a longitudinal section of a second embodiment of a device for reducing polluting substance according to the present invention.

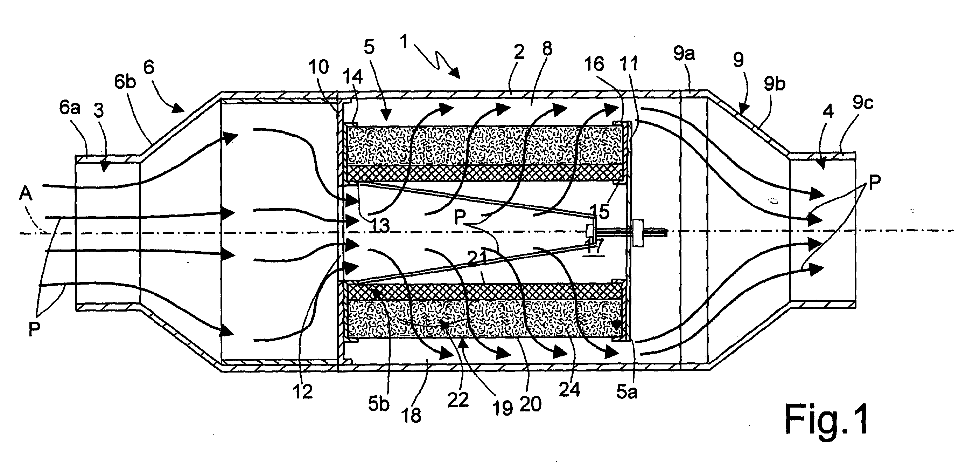

In Figure 1 is shown, and globally designated by the reference number 1, a device for reducing polluting substances present in the exhaust gases of an internal combustion engine according to the present invention.

The device 1 comprises a hollow case 2, substantially cylindrical with axis A provided, at the opposite axial ends, with an inlet 3 and with an outlet 4 for the exhaust gases, both with circular cross section, and catalyst means 5 having tubular, cylindrical or elliptical shape, mounted coaxially inside the case 2 between the inlet and outlet 3, 4. The catalyst means 5, with reference to the direction of flow of the exhaust gases that traverse the catalyst means 5 themselves, comprise an oxidiser 5b, constituted by a silica fibre-based layer 5b catalysed with palladium or by a metal wire mesh 5b coated with ceramic and treated with palladium, and a catalyst cartridge 5a made of silica fibre with purity of at least 99% catalysed with platinum. The layer 5b made of silica fibre can advantageously be constituted by 99% pure, and preferably 99.99% pure, silica fibre.

The case 2 is essentially formed by three hollow bodies that are axially coupled to each other: a first end body 6, substantially funnel shaped, an intermediate body 8 with substantially cylindrical shape within which are positioned the catalyst means 5, and a second end body 9, also substantially funnel shaped.

In particular, the first end body 6 comprises a first portion 6a with substantially cylindrical shape defining the inlet 3 of the device 1, a second portion 6b with substantially cone frustum shape extending integrally from the first portion 6a and having growing diameter starting from the first portion 6a itself; and a third portion 6c with substantially cylindrical shape extending integrally from the second portion 6b and on the extension whereof extends the intermediate body 8.

The second end body 9 instead comprises a first portion 9a with substantially cylindrical shape extending on the extension of the intermediate body 8, a second portion 9b with substantially cone frustum shape extending integrally from the first portion 9a and having decreasing diameter starting from the first portion 9a itself, and a third portion 9c with substantially cylindrical shape extending integrally from the second portion 9b and defining the outlet 4 of the device 1.

The catalyst means 5 are held axially and radially in working position inside the intermediate body 8 by means of a pair of caps 10, 11 positioned at the opposite ends of the catalyst means 5.

In particular, the cap 10 is mounted coaxially in sealed fashion between the first end body 6 and the intermediate body 8, is provided with a central through hole 12 whose diameter substantially coincides with the inner diameter of the catalyst means 5 to allow the passage of the exhaust gases from the first inlet body into the catalyst means 5, and coaxially supports in overhang a pair of centring collars 13, 14, respective inner and outer, extending towards the intermediate body 8 and within which are positioned the catalyst means 5.

The cap 11 has a diameter that is equal to the outer diameter of the catalyst means and is mounted coaxially with ample radial play between the intermediate body 8 and the second end boy 9, coaxially supports in overhang a pair of centring collars 15, 16, respectively inner and outer, wholly identical to the collars 13, 14, also extending towards the intermediate body 8 and within which are positioned the catalyst means 5.

Thanks to this arrangement, the catalyst cartridge 5a is completely closed in sealed fashion by the cap 11.

The radial and axial position of the cap 11 could for example be assured by means of radial tabs - not shown - and by means of an axial tie rod 23 fastened at the ends to the cap 11 and to the collar 13.

The catalyst means 5 internally delimit a cylindrical collection chamber 17 in which are collected the exhaust gases coming from the inlet 3 and externally, jointly with the intermediate body 8, an annular collection chamber 18, which completely surrounds the catalyst means 5, and communicates with the outlet 4 and into which flow the purified exhaust gases which have radially traversed the catalyst means 5.

In particular, the catalyst cartridge 5a comprises a basket 19 formed by two rigid metallic tubular meshes 20, 21, respectively external and internal, coaxial to the axis A and preferably obtained by stretching stainless steel plates of the type capable to withstand high temperatures, and a tubular mat 22 interposed between the two meshes 20, 21.

The mat 22 comprises multiple annular layers 24 comprising silica fibres (SiO₂) with degree of purity of 99%, preferably 99.99%, and platinum.

Inside the basket 19 formed by the two metal meshes 20 and 21 is also contained, when present, the oxidiser 5b, both if the oxidiser 5b is constituted by a layer of silica fibre catalysed with palladium, and if the oxidiser 5b is constituted by a metal wire mesh, coated with ceramic and treated with palladium.

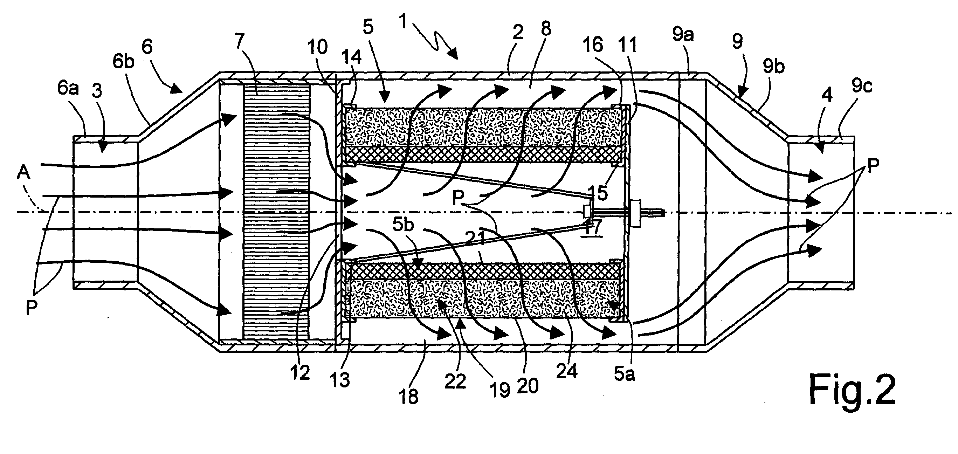

Figure 2 shows substantially the same device as Figure 1 comprising, in addition to the oxidiser 5b, also the oxidiser 7 having a honeycomb structure catalysed with palladium.

A different embodiment of the device of the present invention provides for the use of only the oxidiser 7 having a honeycomb structure catalysed with palladium, mounted upstream of the catalyst cartridge 5a, instead of the use of the oxidiser 5b.

The path of the exhaust gases from the inlet 3 to the outlet 4 of the device 1 is shown in Figures 1 and 2 by arrows indicated with the reference P. In particular, the exhaust gases are inserted into the device 1 through the inlet 3, reach - traversing the oxidiser 7, when present - the internal collection chamber 17 of the catalyst means 5 traversing the hole 12 of the cap 10. The exhaust gases then expand, radially traversing the catalyst means 5, arriving thus purified at the external collection chamber 18, and lastly flow outside the device 1 through the outlet 4. It is essential that the exhaust gases initially traverse the oxidiser 7 and/or the oxidiser 5b catalysed with palladium and only subsequently flow through the catalyst cartridge 5a catalysed with platinum, to obtain the desired reduction of carbon particulate.

The silica fibre layer 5b is catalysed with a quantity of palladium of no less than 0.005 g palladium/g fibre, preferably palladium is present in a quantity ranging between 0.010 and 0.1 g/g fibre, more preferably 0.020 g/g fibre.

The layer 5b can also be catalysed with a mixture of palladium and rhodium.

The oxidiser 7 can be catalysed with a quantity of palladium ranging between 1 and 6 g/dm³, preferably equal to 3.2 g/dm³.

The metal mesh 5b is catalysed with a quantity of palladium ranging between 0.1 and 6 g/dm³, preferably equal to 1.6 g/dm³.

The cartridge 5a can also be catalysed with a mixture of platinum in combination with rhodium and/or palladium.

Naturally, without altering the principle of the invention, the construction details and the embodiments may be widely varied relative to what is described and illustrated herein, without thereby departing from the scope of the present invention.

## Claims

1. Device (1) for reducing the polluting substances present in the exhaust gases of an internal combustion engine, comprising a case (2) provided with an inlet (3) and with an outlet (4) for the exhaust gases, and catalyst means (5; 7), housed in said case (2), between said inlet (3) and said outlet (4), and traversed, in use, by the exhaust gases; **characterised in that** said catalyst means (5; 7) comprise a catalyst cartridge (5a) made of silica fibre with a degree of purity of at least 99% and at least an oxidiser (7; 5b) catalysed with palladium situated upstream of said catalyst cartridge (5a) selected among: a layer of silica fibre (5b) catalysed with palladium, a metal wire mesh (5b) catalysed with palladium and an oxidiser (7) having a honeycomb structure catalysed with palladium.

2. A device as claimed in claim 1, wherein said cartridge (5a) is constituted by silica fibre with purity of 99.99%.

3. A device as claimed in claim 1 or claim 2, wherein said cartridge (5a) is preferably catalysed with platinum.

4. A device as claimed in claim 3 wherein said cartridge (5a) is catalysed with a mixture of platinum and rhodium.

5. A device as claimed in claim 1, wherein said oxidiser (5b; 7) is catalysed with a mixture of platinum and rhodium.

6. A device as claimed in claim 1, **characterised in that** said layer of silica fibre (5b) is catalysed with a quantity of platinum no lower than 0.005 g palladium/g fibre.

7. A device as claimed in claim 6, **characterised in that** said quantity of palladium is between 0.010 and 0.1 g palladium/g fibre, and is preferably equal to 0.020 g palladium/g fibre.

8. A device as claimed in claim 1, **characterised in that** said oxidiser (7) is catalysed with a quantity of palladium ranging between 1 and 6 g/dm³, preferably equal to 3.2 g/dm³.

9. A device as claimed in claim 1, **characterised in that** said metal wire mesh (5b) is catalysed with a quantity of palladium ranging between 0.1 and 6 g/dm³, preferably equal to 1.6 g/dm³.
